(19) Europäisches Patentamt / European Patent Office / Office européen des brevets

(11) **EP 4 549 381 B1**

(12) **EUROPEAN PATENT SPECIFICATION**

(45) Date of publication and mention
of the grant of the patent:
**20.05.2026 Bulletin 2026/21**

(51) International Patent Classification (IPC):
**C01B 32/00** (2017.01)     **H01M 4/133** (2010.01)
**C01B 32/05** (2017.01)     **H01M 10/0525** (2010.01)
**H01M 4/587** (2010.01)

(21) Application number: **23831379.5**

(22) Date of filing: **26.06.2023**

(52) Cooperative Patent Classification (CPC):
**H01M 4/587; C01B 32/00; C01B 32/05;**
H01M 4/133; H01M 10/0525; Y02E 60/10

(86) International application number:
**PCT/JP2023/023573**

(87) International publication number:
**WO 2024/004939 (04.01.2024 Gazette 2024/01)**

(54) **HARDLY-GRAPHITIZABLE CARBON, NEGATIVE ELECTRODE FOR LITHIUM-ION SECONDARY BATTERY, AND LITHIUM-ION SECONDARY BATTERY**

KOHLENSTOFF MIT GERINGER GRAPHITIERBARKEIT, NEGATIVELEKTRODE FÜR LITHIUM-IONEN-SEKUNDÄRBATTERIE UND LITHIUM-IONEN-SEKUNDÄRBATTERIE

CARBONE DIFFICILEMENT GRAPHITISABLE, ÉLECTRODE NÉGATIVE POUR BATTERIE SECONDAIRE AU LITHIUM-ION ET BATTERIE SECONDAIRE AU LITHIUM-ION

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **29.06.2022 JP 2022104551**

(43) Date of publication of application:
**07.05.2025 Bulletin 2025/19**

(73) Proprietors:
• **JFE Chemical Corporation**
  **Tokyo 111-0051 (JP)**
• **JFE Steel Corporation**
  **Tokyo 100-0011 (JP)**

(72) Inventors:
• **OKUMURA, Yusuke**
  **Tokyo 100-0011 (JP)**
• **SUTO, Mikito**
  **Tokyo 100-0011 (JP)**
• **KOBAYASHI, Hikaru**
  **Tokyo 100-0011 (JP)**
• **FUSHIWAKI, Yusuke**
  **Tokyo 100-0011 (JP)**
• **FURUYA, Atomu**
  **Tokyo 111-0051 (JP)**
• **HAGA, Ryuta**
  **Tokyo 111-0051 (JP)**

(74) Representative: **Grünecker Patent- und
Rechtsanwälte
PartG mbB
Leopoldstraße 4
80802 München (DE)**

(56) References cited:
EP-A1- 2 808 300          WO-A1-2014/157125
JP-A- 2013 173 663     JP-A- 2016 017 018
JP-A- 2016 028 999     JP-A- 2020 189 778
JP-A- 2020 189 778     JP-A- H07 320 740
JP-A- H09 213 335        JP-A- H09 328 306
US-A- 5 587 255           US-A1- 2014 080 004

EP 4 549 381 B1

**Description**

TECHNICAL FIELD

The present invention relates to non-graphitizable carbon, a negative electrode for a lithium-ion secondary battery, and a lithium-ion secondary battery.

BACKGROUND ART

These days, with increasing global awareness of global environmental protection, power generation using renewable energy is becoming widespread in order to reduce the use of fossil fuels and reduce $CO_2$ emissions. Since the output of renewable energy generated by solar power generation, wind power generation, or the like is likely to depend on the time zone, season, climate, etc., stabilization of power supply is attempted by using a power storage system (energy storage system, hereinafter referred to as ESS) for suppressing output fluctuation. The power storage system needs a large-scale storage battery; thus, a lithium-ion secondary battery (LIB), which has a high energy density per volume and mass and can be downsized, has attracted attention. At present, carbon materials are commonly used as negative electrode materials of the lithium-ion secondary battery. In addition to carbon, metals such as Si, Sn, Ti, and V or lithium salts of metal oxides, which have high energy density, hybrid materials of carbon and metal, and the like are supposedly in the research stage.

Among carbon materials, graphite-based materials generally have high capacity, and thus have been widely used for mobile electronic devices and the like; however, for ESS use, non-graphitizable carbon materials having high charge/discharge capacity and cycle characteristics are suitable. In particular, unlike hybrid vehicle batteries or the like, ESS use strongly requires high discharge capacity, high volume capacity for downsizing, and life characteristics that allow long-term repeated charge and discharge.

Non-graphitizable carbon as a negative electrode material of the lithium-ion secondary battery has features of being composed of non-oriented graphene layer units, having larger c-axis lengths and smaller crystallite sizes than graphite material, and having pores between graphene layer units. From these structural features, the non-graphitizable carbon can occlude Li not only between layers but also in pores, and thus it is known that the non-graphitizable carbon has a discharge capacity higher than the theoretical capacity of graphite, 372 mAh/g. Further, since the c-axis length is large, the non-graphitizable carbon experiences a small volume change upon extraction or insertion of Li, and is excellent in life characteristics.

Regarding non-graphitizable carbon, for example, Patent Literature 1 discloses that a secondary battery having a large amount of doping/dedoping is obtained by setting the scattering intensity $I_{S(0)}$ of small-angle X-ray scattering of a carbonaceous material to a value in a specific range (claim 1, and paragraphs 0008 and 0019).

In Patent Literature 2, a carbonaceous material in which the average particle size, the specific surface area, etc. are set to values in respective specific ranges, etc. is disclosed as a carbonaceous material that is used for a negative electrode of a nonaqueous electrolyte secondary battery and that, in in-vehicle uses, exhibits not only good charge/-discharge capacity but also low resistance and has good resistance to oxidative degradation (claim 1, and paragraphs 0006 and 0007).

In Patent Literature 3, for a carbon material used as a negative electrode of a sodium secondary battery, a slope A of scattering intensity in a specific wave number range in an X-ray small-angle scattering spectrum, etc. are prescribed (paragraphs 0079, and 0100 to 0107).

Regarding the preparation of a carbon material, Patent Literature 4 discloses a carbon material for a negative electrode of a nonaqueous solvent secondary battery, the carbon material being prepared by a method in which a condensed polycyclic hydrocarbon or a substance containing such a hydrocarbon is polymerized in the presence of hydrogen fluoride and boron trifluoride to obtain precursor pitch or tar, the precursor pitch or tar is modified to produce 100%-optically isotropic modified pitch, the modified pitch is subjected to infusibility impartment treatment, and then baking is performed. Patente Literature 5 and 6 disclose hardly graphitizable carbon material suitable to be used in a negative electrode of a lithium ion secondary battery having a d002 interplanar lattice distance of 0.365 nm or more.

CITATION LIST

PATENT LITERATURE

Patent Literature 1: JP H07-320740 A
Patent Literature 2: JP 6245412 B2

Patent Literature 3: WO 2014/157125 A
Patent Literature 4: JP H10 083814 A
Patent Literature 5 : EP 2808300 A1
Patenet Literature 6: US 2014/080004 A

## SUMMARY OF INVENTION

### TECHNICAL PROBLEMS

However, the carbon material of Patent Literature 1 focuses on the vertical intercept of a Guinier plot in the range of the scattering vector q of 0.1256 nm$^{-1}$ to 0.2083 nm$^{-1}$, and has failed to obtain high discharge capacity required in ESS use.

Also the carbon material of Patent Literature 2 aims for characteristics as in-vehicle use, and has failed to obtain sufficient discharge capacity when used as ESS use. Further, the average particle size and the specific surface area cannot be independently controlled; hence, it is difficult to set both values to values in respective specific ranges, and the characteristics may vary depending also on the shape of the particle.

The carbon material of Patent Literature 3 relates to a sodium-ion secondary battery, and the described measure alone, i.e., controlling the slope of a straight-line approximation other than a Guinier plot in the wave number range of the scattering vector q in X-ray small-angle scattering of 0.6 nm$^{-1}$ to 1.8 nm$^{-1}$, has had difficulty in obtaining high discharge capacity in a lithium-ion secondary battery.

The carbon material of Patent Literature 4 has failed to obtain high discharge capacity required in ESS use.

Thus, an object of the present invention is to provide non-graphitizable carbon, a negative electrode for a lithium-ion secondary battery, and a lithium-ion secondary battery having high discharge capacity.

### SOLUTION TO PROBLEMS

The present inventors conducted intensive studies on a non-graphitizable carbon material having high discharge capacity in order to solve the above issue, and has revealed that non-graphitizable carbon having a predetermined structure has high discharge capacity.

The present invention is based on the above findings, and is specifically an invention that solves the above issue by employing the following configuration.

That is, the present invention provides [1] to [5] below.

[1] Non-graphitizable carbon

wherein a Guinier radius Rg1 in a range of a scattering vector q of 0.30 nm$^{-1}$ or more and 0.40 nm$^{-1}$ or less as measured by small-angle X-ray scattering and determined by Guinier analysis is 3.00 nm or more and 5.80 nm or less,

a Guinier radius Rg2 in a range of the scattering vector q of 2.05 nm$^{-1}$ or more and 2.85 nm$^{-1}$ or less is 0.35 nm or more and 0.57 nm or less, and

an average lattice plane distance d002 of a (002) plane determined by X-ray diffraction is 0.365 nm or more and 0.375 nm or less.

[2] The non-graphitizable carbon according to [1], wherein the average particle size is 20 $\mu$m or more and 40 $\mu$m or less.

[3] The non-graphitizable carbon according to [1] or [2], wherein a true density is 1.45 or more and 1.58 or less.

[4] A negative electrode for a lithium-ion secondary battery, the negative electrode comprising the non-graphitizable carbon according to any one of [1] to [3].

[5] A lithium-ion secondary battery comprising the negative electrode for a lithium-ion secondary battery according to [4].

### ADVANTAGEOUS EFFECTS OF INVENTION

According to the present invention, non-graphitizable carbon, a negative electrode for a lithium-ion secondary battery, and a lithium-ion secondary battery having high discharge capacity can be provided.

BRIEF DESCRIPTION OF DRAWINGS

[FIG. 1] FIG. 1 is diagrams showing relationships between the natural logarithm of the scattering intensity ∆intensity and the square of the scattering vector q of non-graphitizable carbon of Example 4 and Comparative Example 3.
[FIG. 2] FIG. 2 is a cross-sectional view of an evaluation battery fabricated to evaluate battery characteristics in Examples and Comparative Examples.

DESCRIPTION OF EMBODIMENTS

In the present specification, when a range is indicated using "to", the range includes both ends of "to". For example, the range of A to B includes A and B.

[Non-graphitizable carbon]

Non-graphitizable carbon of the present invention (carbon of the present invention) is non-graphitizable carbon in which a Guinier radius $Rg1$ in the range of a scattering vector q of 0.30 $nm^{-1}$ or more and 0.40 $nm^{-1}$ or less as measured by small-angle X-ray scattering and determined by Guinier analysis is 3.00 nm or more and 5.80 nm or less,

a Guinier radius $Rg2$ in the range of the scattering vector q of 2.05 $nm^{-1}$ or more and 2.85 $nm^{-1}$ or less is 0.35 nm or more and 0.57 nm or less, and
an average lattice plane distance $d002$ of the (002) plane determined by X-ray diffraction is 0.365 nm or more and 0.375 nm or less.

<Small-angle X-ray scattering>

<<Guinier radius Rg1>>

In general, the scattering intensity according to small-angle X-ray scattering analysis when a particle is used as a sample is based on superposition of scattering from a plurality of pores and a particle surface shape of the particle.
Further, scattering when the range of the scattering vector q is 0.30 $nm^{-1}$ or more and 0.40 $nm^{-1}$ or less is mainly based on scattering from a particle surface shape. A Guinier radius $Rg1$ (hereinafter, also referred to as "$Rg1$") determined by Guinier analysis in the above range of the scattering vector q includes information such as the particle size, the particle shape, the specific surface area, pores of a particle surface layer, and the roughness of the particle. When the particle size is larger, the specific surface area is smaller, the pore of the surface layer is smaller, and the roughness of the particle is smaller, $Rg1$ is likely to be smaller.
The scattering vector q is expressed by the following formula.

Scattering vector q = $4\pi\sin\theta/\lambda$ ($\theta$: the scattering angle, $\lambda$: the wavelength of the X-ray)

By $Rg1$ being 3.00 nm or more and 5.80 nm or less, the carbon of the present invention has an optimum particle shape for fabricating an electrode (in particular, a negative electrode), can obtain high discharge capacity, and is excellent in charge/discharge efficiency.
When $Rg1$ is less than 3.00 nm, the particle size is too large or the particle surface is smooth, and the application of the electrode is difficult. When $Rg1$ is more than 5.80 nm, the particle size is too small or the surface area of the particle is increased, and the electrode cannot be applied thickly. Further, the reaction area of the particle surface is increased, and charge/discharge efficiency is reduced.
$Rg1$ is preferably 4.20 nm or more from the viewpoint of being able to obtain higher discharge capacity and being excellent in charge/discharge efficiency.
$Rg1$ is preferably 5.70 nm or less from the viewpoint of being able to maintain charge/discharge efficiency.

Control of Rg1

For the control of $Rg1$, for example, $Rg1$ can be controlled to a value in the above predetermined range by adjusting the particle size, the particle shape, the specific surface area, the surface roughness, etc. by subjecting the source material of the non-graphitizable carbon to crosslinking treatment and infusibility impartment treatment and subjecting the resulting infusibility impartment-treated product to pulverization treatment and baking. In particular, by performing infusibility impartment by a multistage treatment to equalize the degree of oxidation of the interior of the particle, the Guinier radius Rg1 in the present invention can be controlled to a value in a predetermined range. Further, the Guinier radius Rg1 in the present invention can be controlled to a value in a predetermined range also by adjusting pulverization treatment conditions and as necessary removing unnecessary fine powder, coarse powder, and particles having unique shapes from non-graphitizable carbon after pulverization treatment, or mixing two or more kinds of non-graphitizable carbon pulverized under different pulverization treatment conditions.

<<Guinier radius Rg2>>

In general, scattering when, in small-angle X-ray scattering analysis performed on a particle as a sample, the range of the scattering vector q is 2.05 nm$^{-1}$ or more and 2.85 nm$^{-1}$ or less is mainly based on scattering from pores in the particle. A Guinier radius Rg2 (hereinafter, also referred to as "Rg2") determined by Guinier analysis in the above range of the scattering vector q includes information regarding the size of the pore in the particle. In the present invention, Rg2 corresponds to the radius of inertia of the pore present in the non-graphitizable carbon.

By Rg2 being 0.35 nm or more and 0.57 nm or less, the carbon of the present invention has a large number of optimum pores for occlusion and release of Li in association with charge and discharge, can obtain high discharge capacity, and is excellent in discharge capacity and charge/discharge efficiency.

When Rg2 is more than 0.57 nm, the number of large pores is large and thus charge/discharge efficiency is excellent, but the number of pores having sizes capable of trapping Li is small and discharge capacity is reduced. When Rg2 is less than 0.35 nm, the number of pores having sizes capable of trapping Li is large and charge capacity is excellent, but the trapped Li is hardly released and charge efficiency is reduced.

Rg2 is preferably 0.38 nm or more and 0.50 nm or less because higher discharge capacity can be obtained and charge/discharge efficiency is excellent.

Control of Rg2

For the control of Rg2, for example, Rg2 can be controlled to a value in the above predetermined range by, in the case of subjecting the source material of the non-graphitizable carbon to crosslinking treatment, infusibility impartment treatment, pulverization treatment, and baking, particularly performing infusibility impartment by a multistage treatment to equalize the degree of oxidation of the interior of the particle. Further, by setting the baking temperature to 600 to 850°C, Rg2 effective for occlusion and release of Li can be controlled. Rg2 can be controlled also by alkali treatment or the like, in addition to the above treatment. From the viewpoint of cost, Rg2 is preferably controlled through the baking temperature.

Calculation of the Guinier radii Rg1 and Rg2

For the carbon of the present invention, the Guinier radii Rg1 and Rg2 can be determined by small-angle X-ray scattering. The Guinier radii Rg1 and Rg2 can be calculated by measuring small-angle X-ray scattering in the following manner and performing Guinier analysis.

The measurement of small-angle X-ray scattering was performed under the following conditions.

Beam line: Spring-8 BL08 B2-SAXS
Energy: 12.4 keV
Detector: PILATUS 3-S-1M
Camera length, two-level measurement camera length: 558 mm

Small-angle X-ray scattering measurement was performed by the following procedure.

The scattering of a sample put in a capillary was measured, the resulting two-dimensional data was circumferentially averaged into one-dimensional data, and the one-dimensional data was taken as a scattering intensity $Int._{sample}$ that is a function of the scattering vector q (nm$^{-1}$). Further, the scattering of only the capillary was measured, the resulting two-dimensional data was circumferentially averaged into one-dimensional data, and the one-dimensional data was taken as a scattering intensity $Int._{blank}$ that is a function of the scattering vector q (nm$^{-1}$).

The transmittance $T_{sample}$ of the sample was determined by Formula (1) below, and the transmittance $T_{blank}$ of only the capillary was determined by Formula (2) below. Here, the parameters in Formulae (1) and (2) are as follows. The intensity of incident X-rays was measured in an ion chamber upstream of the sample, and the intensity of transmitted X-rays was measured in a PIN diode of a beam stopper downstream of the sample.

$I_{0sample}$: the intensity of incident X-rays of the capillary + the sample

$I_{1sample}$: the intensity of transmitted X-rays of the capillary + the sample
$I_{0blank}$: the intensity of incident X-rays of only the capillary
$I_{1blank}$: the intensity of transmitted X-rays of only the capillary
$I_{0air}$: the intensity of incident X-rays of only air
$I_{1air}$: the intensity of transmitted X-rays of only air
$I_{0dark}$: dark current of the ion chamber
$I_{1dark}$: dark current of the PIN diode

[Math. 1]

$$T_{sample} = \frac{(I_{1sample} - I_{1dark})}{(I_{0sample} - I_{0dark})} \div \frac{(I_{1air} - I_{1dark})}{(I_{0air} - I_{0dark})} \qquad 式（1）$$

$$T_{blank} = \frac{(I_{1blank} - I_{1dark})}{(I_{0blank} - I_{0dark})} \div \frac{(I_{1air} - I_{1dark})}{(I_{0air} - I_{0dark})} \qquad 式（2）$$

Formula (1) Formula (2)

Further, the scattering intensity Δintensity from the sample was calculated using the following formula.

$$\Delta intensity = Int._{sample}/T_{sample} - Int._{blank}/T_{blank}$$

The scattering intensity Δintensity from the sample is a function of the scattering vector q, and the Guinier radii Rg1 and Rg2 can be calculated by performing Guinier analysis. The Guinier analysis is a method in which plotting is performed with ln(Δintensity) on the vertical axis and $q^2$ on the horizontal axis and a Guinier radius is calculated from the slope of a straight-line region. The slope of the range of the scattering vector q of 0.30 nm$^{-1}$ or more and 0.40 nm$^{-1}$ or less corresponds to $- 1/3Rg1^2$, and the slope of the range of the scattering vector q of 2.05 nm$^{-1}$ or more and 2.85 nm$^{-1}$ or less corresponds to $-1/3Rg2^2$. From these, the Guinier radii Rg1 and Rg2 can be determined.

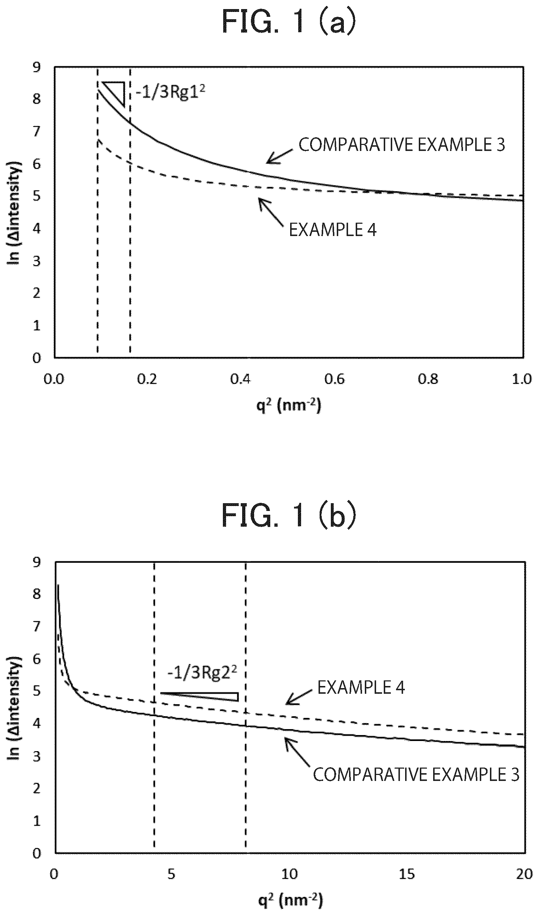

FIGS. 1(a) and 1(b) show examples of Guinier analysis of Example 4 and Comparative Example 3.
FIGS. 1(a) and 1(b) are diagrams (graphs) showing relationships between the natural logarithm of the scattering intensity Δintensity and the square of the scattering vector q of non-graphitizable carbon of Example 4 and Comparative Example 3. In FIGS. 1(a) and 1(b), the vertical axis of the graph represents in(Δintensity), and the horizontal axis of the graph represents $q^2$. In each graph, as indicated by the arrows, the dotted line indicates Example 4, and the solid line indicates Comparative Example 3.
In FIG. 1(a), a straight-line region is obtained for Example 4 in the range of the value of the scattering vector q of 0.30 nm$^{-1}$ or more and 0.40 nm$^{-1}$ or less (the value of the square of the scattering vector q of 0.09 nm$^{-2}$ or more and 0.16 nm$^{-2}$ or less), and the Guinier radius Rg1 of Example 4 can be determined from the slope of the straight line in this range. The Guinier radius Rg1 of Comparative Example 3 can be determined in a similar manner to the above.
In FIG. 1(b), a straight-line region is obtained for Example 4 in the range of the value of the scattering vector q of 2.05 nm$^{-1}$ or more and 2.85 nm$^{-1}$ or less (the value of the square of the scattering vector q of 4.20 nm$^{-2}$ or more and 8.12 nm$^{-2}$ or less), and the Guinier radius Rg2 of Example 4 can be determined from the slope of the straight line in this range. The Guinier radius Rg2 of Comparative Example 3 can be determined in a similar manner to the above.

<Average lattice plane distance d002 of the (002) plane>

In the non-graphitizable carbon of the present invention, the average lattice plane distance d002 of the (002) plane in X-ray diffraction (hereinafter, also referred to as simply an "average lattice plane distance d002") is 0.365 nm or more and 0.375 nm or less.
When the average lattice plane distance d002 is less than 0.365 nm, the Li extraction/insertion port is small and extraction and insertion are difficult, and the discharge capacity is reduced. Further, in association with extraction and insertion of Li, the average lattice plane distance d002 repeats expansion and contraction, and the crystal structure collapses; consequently, the cycle life is reduced. When the average lattice plane distance d002 is more than 0.375 nm, the volume capacity is reduced.
The average lattice plane distance d002 is preferably 0.370 nm or more and 0.374 nm or less because higher discharge capacity can be obtained and cycle life or volume capacity can be maintained.

· Control of the average lattice plane distance d002

The method for controlling the average lattice plane distance d002 is not particularly limited; for example, a material by the baking of which the average lattice plane distance d002 is brought into a predetermined range can be selected as a source material of the non-graphitizable carbon. Such a source material may be selected from, for example, some types of pitch such as coal-based pitch and petroleum-based pitch, resins such as phenol resin and furan resin, mixtures of pitch and resin, and the like, and in particular, coal-based pitch is preferable because the average lattice plane distance d002 is likely to fall within a predetermined range.

· Measurement of the average lattice plane distance d002

In the present invention, the average lattice plane distance d002 refers to one calculated from the position of a diffraction peak of the (002) plane of the non-graphitizable carbon measured using CuK$\alpha$ rays as X-rays and high-purity silicon as a standard substance. The calculation method conforms to the "Gakushin" method (a measurement method provided by the 17th Committee of Japan Society for the Promotion of Science), and is specifically a method described in Sugio Ohtani, "TANSO-SEN'I" ("CARBON FIBER"), pp. 733-742, March 1986, Kindai Henshu Sha.

(Average particle size)

The average particle size of the non-graphitizable carbon of the present invention is preferably 20 to 40 $\mu$m and more preferably 25 to 35 $\mu$m because application can be performed with a stable, thick coating film thickness for a thick-film electrode aiming for high capacity.

The average particle size of the non-graphitizable carbon of the present invention is a particle size ($D_{50}$) at which the cumulative frequency in a laser diffraction particle size distribution meter is 50% in volume percentage.

(Specific surface area (BET))

In the non-graphitizable carbon of the present invention, the specific surface area (BET) determined by a BET method based on adsorption of nitrogen gas varies depending on the particle size, and therefore cannot be described unconditionally; however, in terms of suppressing reactivity with the electrolytic solution, the specific surface area is preferably 10 m$^2$/g or less and more preferably 1 to 6 m$^2$/g.

(True density)

The true density of the non-graphitizable carbon of the present invention is preferably 1.45 g/cm$^3$ or more, more preferably 1.47 g/cm$^3$ or more, and most preferably 1.49 g/cm$^3$ or more because, as the value of the true density increases, the electrode density improves more and the volume capacity improves more. The true density is preferably 1.58 g/cm$^3$ or less, more preferably 1.56 g/cm$^3$ or less, and most preferably 1.54 g/cm$^3$ or less because high discharge capacity and excellent volume capacity can be maintained.

The true density can be determined by a liquid phase substitution method with a pycnometer using butanol according to JIS R 7222.

[Method for producing the non-graphitizable carbon]

The non-graphitizable carbon of the present invention can be obtained by, for example, the following production method. The production method for obtaining the non-graphitizable carbon of the present invention is not limited to the following.

As the method for producing the non-graphitizable carbon of the present invention, for example, a method including the following steps in this order is preferable because higher discharge capacity can be obtained.

[Crosslinking treatment step]

First, a source material of the non-graphitizable carbon is subjected to crosslinking treatment to obtain a crosslinking-treated product.

[Infusibility impartment treatment step]

Next, the crosslinking-treated product is subjected to infusibility impartment treatment to obtain an infusibility impartment-treated product.

[Pulverization treatment step]

Next, the infusibility impartment-treated product is subjected to pulverization treatment to obtain a pulverization-treated product.

[Baking step]

Next, the pulverization-treated product is fired to produce non-graphitizable carbon.
Each step will now be described.

[Crosslinking treatment step]

First, a source material of the non-graphitizable carbon (hereinafter, also referred to as simply a "source material") is subjected to crosslinking treatment to obtain a crosslinking-treated product.
Here, as a source material used for the method for producing the carbon of the present invention, a material by the baking (described later) of which the average lattice plane distance $d_{002}$ is brought into the above predetermined range of the present invention can be selected. The source material may be selected from, for example, some types of pitch such as coal-based pitch and petroleum-based pitch, resins such as phenol resin and furan resin, mixtures of pitch and resin, and the like, and in particular, coal-based pitch is preferable because the average lattice plane distance $d_{002}$ is likely to fall within a predetermined range.
Examples of the method for subjecting the above-described source material to crosslinking treatment include a method based on air blowing reaction, a dry method with oxidizing gas (air, oxygen, or ozone), a wet method with an aqueous solution of nitric acid, sulfuric acid, hypochlorous acid, a mixed acid, or the like, etc., and among them, a method based on air blowing reaction is preferable.
The air blowing reaction is a reaction in which the above-described source material is heated and an oxidizing gas (for example, air, oxygen, or ozone, or a mixture of them) is blown in to raise the softening point. By using the air blowing reaction, a crosslinking-treated product (for example, air blown pitch) having a high softening point of, for example, 200°C or more can be obtained.
According to JP H09-153359 A, it is known that air blowing reaction is a reaction in a liquid phase state and hardly causes incorporation of oxygen atoms into the carbon material as compared to crosslinking treatment in a solid phase state.
In the air blowing reaction, a reaction mainly based on oxidative dehydration reaction proceeds, and polymerization proceeds by biphenyl-type crosslinking bonding. It is known that, by subsequent infusibility impartment and baking (described later), non-graphitizable carbon having a non-oriented three-dimensional structure in which such crosslinked portions are predominant and retaining a large number of voids for lithium to be occluded in is supposedly obtained.
The conditions for air blowing reaction are not particularly limited, but the reaction temperature is preferably 280 to 420°C and more preferably 320 to 380°C because excessively high temperatures cause a mesophase and low temperatures cause a low reaction rate. The amount of oxidizing gas blown in is preferably 0.5 to 15 L/min and more preferably 1.0 to 10 L/min per 1000 g of pitch as compressed air. The reaction pressure may be any of normal pressure, reduced pressure, and increased pressure, and is not particularly limited.
The softening point of a crosslinking-treated product such as air blown pitch obtained by such crosslinking treatment is preferably 200 to 400°C and more preferably 250 to 350°C in terms of ease of infusibility impartment treatment.
The obtained crosslinking-treated product may be coarsely pulverized using an atomizer or the like before subjected to infusibility impartment treatment.

[Infusibility impartment treatment step]

Next, the crosslinking-treated product such as air blown pitch is subjected to infusibility impartment treatment to obtain an infusibility impartment-treated product (for example, infusibility-imparted pitch). The infusibility impartment treatment is a kind of crosslinking treatment (oxidation treatment) performed in a solid phase state; thereby, oxygen is incorporated into the structure of the crosslinking-treated product, and by further proceeding of crosslinking, melting is hindered at high temperature.

The method of infusibility impartment treatment is not particularly limited; examples include a dry method with an oxidizing gas (air or oxygen), a wet method with an aqueous solution of nitric acid, sulfuric acid, hypochlorous acid, a mixed acid, or the like, and the like, and among them, a dry method with an oxidizing gas is preferable.

As the treatment temperature of infusibility impartment treatment, a temperature not more than the softening point of the crosslinking-treated product needs to be selected. Further, the rate of temperature increase in the case of performing the treatment in a batch system is preferably 5 to 100°C/hour and more preferably 10 to 50°C/hour from the viewpoint of preventing fusion bonding more.

The number of times of infusibility impartment treatment is preferably set to two or more from the viewpoint of equalizing the degree of oxidation of the interior of the particle for homogeneity in order to obtain higher discharge capacity and stable characteristics of the non-graphitizable carbon.

Other treatment conditions in the infusibility impartment treatment are not particularly limited, but for example, the amount of oxidizing gas blown in is preferably 1.0 to 20 L/min and more preferably 2.0 to 10 L/min as compressed air per 1000 g. The reaction pressure may be any of normal pressure, reduced pressure, and increased pressure, and is not particularly limited.

The amount of oxygen in the infusibility impartment-treated product obtained by infusibility impartment treatment is preferably 3 to 20 mass% and more preferably 5 to 15 mass% in terms of preventing fusion bonding during baking.

[Pulverization treatment step]

Next, the infusibility impartment-treated product such as infusibility-imparted pitch is subjected to pulverization treatment to obtain a pulverization-treated product (the infusibility impartment-treated product after pulverization treatment). The Guinier radius Rg1 of the present invention can be controlled to a value in a predetermined range by adjusting pulverization treatment conditions and as necessary removing unnecessary fine powder, coarse powder, and particles having unique shapes from the infusibility impartment-treated product after pulverization treatment. The Guinier radius Rg1 of the present invention can be controlled to a value in a predetermined range also by mixing two or more kinds of infusibility impartment-treated products pulverized under different pulverization treatment conditions.

At this time, pulverization is preferably performed such that the average particle size of the pulverization-treated product (the infusibility impartment-treated product after pulverization treatment) is 20 to 40 $\mu$m, and is more preferably performed such that the average particle size is 25 to 35 $\mu$m.

The average particle size referred to herein is a particle size ($D_{50}$) at which the cumulative frequency in a laser diffraction particle size distribution meter is 50% in volume percentage.

The pulverizer used for pulverization treatment is not particularly limited, and known methods can be used; examples include a jet mill, a pin mill, a ball mill, a hammer mill, a roller mill, a vibration mill, and the like.

In the case of using these pulverizers, the pulverization conditions are set such that the average particle size of the infusibility impartment-treated product after pulverization treatment falls within the above range.

[Baking]

Next, the pulverization-treated product is, for example, fired under reduced pressure or in an inert gas atmosphere such as nitrogen, and thereby non-graphitizable carbon can be obtained. The ultimate temperature (baking temperature) in baking is preferably 600 to 900°C and more preferably 650 to 800°C from the viewpoint of obtaining higher discharge capacity. At this time, the rate of temperature increase is preferably 50 to 150°C/hour and more preferably 80 to 120°C/hour.

[Negative electrode for a lithium-ion secondary battery]

A negative electrode for a lithium-ion secondary battery of the present invention (a negative electrode of the present invention) is a negative electrode for a lithium-ion secondary battery containing the non-graphitizable carbon of the present invention (the carbon of the present invention).

The negative electrode of the present invention can have high discharge capacity by containing the carbon of the present invention.

The negative electrode of the present invention is not particularly limited except that the non-graphitizable carbon of the present invention is contained.

Examples of the method for producing the negative electrode of the present invention include a method in which a negative electrode mixture coating material containing the non-graphitizable carbon of the present invention and a binder is prepared, the negative electrode mixture coating material is applied to one surface or both surfaces of a current collector to form a negative electrode mixture layer, and thereby the negative electrode of the present invention is produced.

As the binder, those having chemical stability and electrochemical stability to the electrolyte are preferable. As the binder, for example, polyvinylidene fluoride, carboxymethyl cellulose (CMC), styrene-butadiene rubber (SBR), or the like can be used.

The negative electrode mixture coating material may further contain, for example, a carbon material other than the non-graphitizable carbon of the present invention or graphite as an active material, carbon black or carbon fiber as a conductive agent, and a solvent.

The content amount of the non-graphitizable carbon of the present invention is preferably set to about 1 to 20 mass% in the total amount of the negative electrode mixture.

The current collector used for the negative electrode of the present invention is not particularly limited. Examples of the shape of the current collector include foil shapes, and net shapes such as mesh and expanded metal. Examples of the material of the current collector include copper, stainless steel, and nickel.

[Lithium-ion secondary battery]

A lithium-ion secondary battery of the present invention (a battery of the present invention) is a lithium-ion secondary battery including the negative electrode for a lithium-ion secondary battery of the present invention (the negative electrode of the present invention).

The battery of the present invention can have high discharge capacity by including the negative electrode of the present invention.

The lithium-ion secondary battery of the present invention is not particularly limited except that the negative electrode of the present invention is used, and for other battery components than the negative electrode, elements of common lithium-ion secondary batteries may be used correspondingly.

Usually, the lithium-ion secondary battery includes a negative electrode, a positive electrode, and a nonaqueous electrolytic solution as main battery components, the positive electrode and the negative electrode are each formed of a substance (as a layered compound), a compound, or a cluster capable of occluding lithium ions, and the entry and exit of lithium ions in charge/discharge processes are performed between layers. This is a battery mechanism in which lithium ions are doped into the negative electrode during charge and are dedoped from the negative electrode during discharge.

[Negative electrode]

The negative electrode included in the lithium-ion secondary battery of the present invention is not particularly limited as long as it is the negative electrode of the present invention.

[Positive electrode]

As the material of the positive electrode (positive electrode active material), a material that a sufficient amount of lithium ions can be doped into and dedoped from is preferably selected. Examples of such a positive electrode active material include transition metal oxides, transition metal chalcogenides, and vanadium oxides, and lithium-containing compounds of these, a Chevrel phase compound represented by the general formula $M_XMo_6S_{8-Y}$ (in the formula, X representing a numerical value in the range of $0 \leq X \leq 4$, Y representing a numerical value in the range of $0 \leq Y \leq 1$, and M representing a metal such as a transition metal), lithium iron phosphate, activated carbon, activated carbon fiber, and the like; for these, one kind may be used singly, or two or more kinds may be used in combination. Also a carbonate such as lithium carbonate may be added into the positive electrode, for example.

The lithium-containing transition metal oxide is a composite oxide of lithium and a transition metal, and may be a solid solution of lithium and two or more transition metals. Specifically, the lithium-containing transition metal oxide is represented by $LiM(1)_{1-P}M(2)_PO_2$ (in the formula, P representing a numerical value in the range of $0 \leq P \leq 1$, and M(1) and M(2) representing at least one transition metal element) or $LiM(1)_{2-Q}M(2)_QO_4$ (in the formula, Q representing a numerical value in the range of $0 \leq Q \leq 1$, and M(1) and M(2) representing at least one transition metal element). Here, examples of the transition metal element represented by M include Co, Ni, Mn, Cr, Ti, V, Fe, Zn, Al, In, Sn, and the like, and Co, Fe, Mn, Ti, Cr, V, and Al are preferable.

Such a lithium-containing transition metal oxide can be obtained by, for example, using oxides or salts of Li and a transition metal as starting materials, mixing these starting materials according to the composition, and performing baking in the temperature range of 600 to 1000°C in an oxygen atmosphere. The starting material is not limited to oxides or salts, and a lithium-containing transition metal oxide can be synthesized also from a hydroxide or the like.

Examples of the method for forming a positive electrode by using such a positive electrode material include a method in which a paste-like positive electrode mixture coating material composed of a positive electrode material, a binder, and a conductive agent is applied to one surface or both surfaces of a current collector to form a positive electrode mixture layer. As the binder, those given as examples for the negative electrode can be used. As the conductive agent, for example, a fine particulate carbon material, a fibrous carbon material, graphite, carbon black, or VGCF (vapor grown carbon fiber) can be used. The shape of the current collector is not particularly limited, and a current collector having a similar shape to the negative electrode is used. As a material of the current collector, aluminum, nickel, stainless steel foil, or the like can be usually used.

In forming the above-described positive electrode, various additives such as known conductive agents and binders can be used as appropriate.

[Electrolyte]

As the electrolyte, an ordinary nonaqueous electrolyte containing a lithium salt such as $LiPF_6$ or $LiBF_4$ as an electrolyte salt is used.

The nonaqueous electrolyte may be a liquid nonaqueous electrolytic solution, or may be a polymer electrolyte such as a solid electrolyte or a gel electrolyte.

In the case of a liquid nonaqueous electrolyte solution, an aprotic organic solvent such as ethylene carbonate, propylene carbonate, or dimethyl carbonate can be used as a nonaqueous solvent.

In the case of a polymer electrolyte, the polymer electrolyte contains a matrix polymer that is prepared in a gel form with a plasticizer (nonaqueous electrolytic solution). As the matrix polymer, an ether-based polymer such as polyethylene oxide or a crosslinked product thereof, a polymethacrylate-based polymer, a polyacrylate-based polymer, a fluorine-based polymer such as polyvinylidene fluoride or a vinylidene fluoride-hexafluoropropylene copolymer, or the like can be used singly or in mixture, and among them, a fluorine-based polymer is preferable from the viewpoint of oxidation-reduction stability, etc.

As an electrolyte salt and a nonaqueous solvent contained in the plasticizer (nonaqueous electrolytic solution) contained in the polymer electrolyte, those that can be used for a liquid electrolytic solution can be used.

In the lithium-ion secondary battery of the present invention, a separator such as a microporous body of polypropylene or polyethylene or a layer structure of such microporous bodies, or nonwoven fabric can usually be used.

The lithium-ion secondary battery of the present invention can also use a gel electrolyte. In this case, for example, a negative electrode containing the non-graphitizable carbon of the present invention, a gel electrolyte, and a positive electrode are stacked in this order, and are housed in a battery exterior material.

The structure of the lithium-ion secondary battery of the present invention is arbitrary, and the shape and form thereof are not particularly limited and can be freely selected from, for example, a cylindrical type, a square type, and a coin type.

EXAMPLES

The present invention will now be specifically described by showing Examples. However, the present invention is not limited to the Examples described below.

[Non-graphitizable carbon]

<Example 1>

1000 g of coal-based QI-less pitch (QI: 0.1 to 0.5 mass%, the softening point: 82.5°C) was put into an autoclave equipped with an anchor type stirring apparatus, heating was performed to 350°C in a nitrogen stream, then compressed air was blown into the pitch while being circulated at 5 L/min, and heating was performed at 350°C for 2 hours to perform crosslinking treatment by air blowing reaction. After that, cooling was performed to room temperature, and the contents (air blown pitch) were taken out.

Next, the taken-out air blown pitch was coarsely pulverized with an atomizer and was then put into a rotary furnace, and infusibility impartment treatment was performed in the following way: the temperature was increased at 20°C/hour while compressed air was circulated at 5 L/min, then holding was performed at 200°C for 1 hour (the first round of infusibility impartment treatment), then the temperature was reduced once and increased again to 250°C, and holding was performed for 5 hours (the second round of infusibility impartment treatment); thus, infusibility-imparted pitch was obtained.

The obtained infusibility-imparted pitch was subjected to pulverization treatment by using a jet mill (FS-4, manufactured by Seishin Enterprise Co., Ltd.) under such conditions that the average particle size of the pulverized product would be 20 to 30 $\mu$m.

Next, 100 g of the infusibility-imparted pitch subjected to the pulverization treatment was put into a graphite lidded container, the temperature was increased to a baking temperature of 850°C at a rate of temperature increase of 100°C/hour in a nitrogen stream, and baking was performed at 850°C for 2 hours; thus, a carbon powder was obtained.

<Examples 2 to 5>

In Examples 2 to 5, a carbon powder was obtained in a similar manner to Example 1 except that the baking temperature was made different from that of Example 1 (for the baking temperature, see the section of "Baking temperature" of Table 1).

<Comparative Example 1>

1000 g of coal-based QI-less pitch (QI: 0.1 to 0.5 mass%, the softening point: 82.5°C) was put into an autoclave equipped with an anchor type stirring apparatus, heating was performed to 350°C in a nitrogen stream, then compressed air was blown into the pitch while being circulated at 5 L/min, and heating was performed at 350°C for 2 hours to perform crosslinking treatment by air blowing reaction. After that, cooling was performed to room temperature, and the contents (air blown pitch) were taken out.

Next, the taken-out air blown pitch was coarsely pulverized with an atomizer and was then put into a rotary furnace, and infusibility impartment treatment was performed in the following way: the temperature was increased at 20°C/hour while compressed air was circulated at 5 L/min, then holding was performed at 200°C for 1 hour, then the temperature was reduced once and increased again to 250°C, and holding was performed at 250°C for 5 hours; thus, infusibility-imparted pitch was obtained.

100 g of the obtained infusibility-imparted pitch was put into a graphite lidded container as it was without being subjected to pulverization treatment, the temperature was increased to 950°C at a rate of temperature increase of 100°C/hour in a nitrogen stream, baking was performed at 950°C for 2 hours, and then pulverization treatment was performed under the same conditions as in Example 1; thus, a carbon powder was obtained.

<Comparative Example 2>

In Comparative Example 2, a carbon powder was obtained in a similar manner to Comparative Example 1 except that the baking temperature was made different from that of Comparative Example 1 (see the section of "Baking temperature" of Table 1).

<Comparative Example 3>

In Comparative Example 3, a carbon powder was obtained in a similar manner to Comparative Example 1 except that the baking temperature and the pulverization conditions after baking were made different from those of Comparative Example 1 (for the baking temperature and the average particle size of the carbon powder, see the sections of "Baking temperature" and "Average particle size" of Table 1).

<Comparative Example 4>

A carbon powder was obtained by using the same conditions as in Comparative Example 1 except that the baking temperature was changed to 1100°C and infusibility impartment treatment was not performed.

<Comparative Example 5>

A carbon powder was obtained by using the same conditions as in Comparative Example 1 except that the baking temperature was changed to 1100°C and ethylene bottom oil was used as a source material.

<Comparative Example 6>

Natural graphite having an average particle size of 16 $\mu$m was used as a carbon powder.

<Evaluation of the carbon powder>

For the carbon powder obtained in each of Examples 1 to 5 and Comparative Examples 1 to 6, the average particle size (unit: $\mu$m), the specific surface area (BET) (unit: $m^2/g$), the average lattice plane distance d002 of the (002) plane (unit: nm), the true density (unit: $g/cm^3$), and the Guinier radii Rg1 and Rg2 (unit: nm) determined using Guinier analysis from small-angle X-ray scattering were measured by the respective methods described above. The results are shown in the section of "Analysis results" of Table 1 below.

[Negative electrode, Lithium-ion secondary battery]

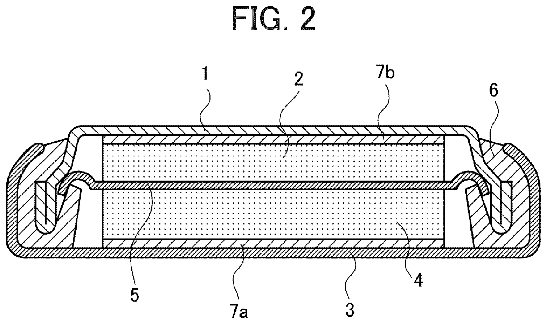

Next, the carbon powder obtained in each of Examples 1 to 5 and Comparative Examples 1 to 6 was used to fabricate a negative electrode, the negative electrode was used to fabricate an evaluation battery (see FIG. 2), and the following evaluation was performed.

(Preparation of a negative electrode mixture paste)

First, each of the carbon powders obtained in the above manner was used as a negative electrode material to prepare a negative electrode mixture paste. Specifically, the carbon powder (95 parts by mass) and a 12% N-methylpyrrolidinone solution of polyvinylidene difluoride (5 parts by mass in terms of solid content) were put into a planetary mixer, stirring was performed at 100 rpm for 15 minutes, N-methylpyrrolidinone was further added to adjust the solid content ratio to 60%, and subsequently stirring was performed for 15 minutes; thus, a negative electrode mixture paste was prepared.

(Fabrication of a working electrode (negative electrode))

Each of the negative electrode mixture pastes prepared in the above manner was applied onto copper foil to have a uniform thickness, and the workpiece was put into a blower dryer to volatilize the solvent at 100°C; thus, a negative electrode mixture layer was formed. Next, the negative electrode mixture layer was pressed by roller pressing, and was punched into a circular shape having a diameter of 15.5 mm; thus, a working electrode (negative electrode) including a negative electrode mixture layer stuck to a current collector made of copper foil was fabricated. Before the evaluation, drying at 100°C for 8 hours or more in a vacuum was performed.

(Preparation of an electrolytic solution)

$LiPF_6$ was dissolved at a concentration of 1 mol/$dm^3$ in a mixed solvent obtained by mixing ethylene carbonate (33 vol%) and methyl ethyl carbonate (67 vol%), and thus a nonaqueous electrolytic solution was prepared.

(Fabrication of an evaluation battery)

Next, each of the working electrodes (negative electrodes) fabricated in the above manner was used to fabricate an evaluation battery shown in FIG. 2 attached. FIG. 2 is a cross-sectional view of an evaluation battery (coin-type secondary battery for evaluation) fabricated to evaluate battery characteristics in Examples and Comparative Examples.
The fabrication of the evaluation battery will now be described with reference to FIG. 2. First, lithium metal foil was pressed against a nickel net, and the workpiece was punched into a circular shape having a diameter of 15.5 mm; thereby, a disk-shaped counter electrode (positive electrode) 4 made of lithium foil and stuck to a current collector 7a made of a nickel net was fabricated.
Next, a separator 5 impregnated with the electrolyte solution was placed between the working electrode (negative electrode) 2 stuck to a current collector 7b and the counter electrode 4 stuck to the current collector 7a and stacking was performed, then the working electrode 2 was housed in an exterior cup 1 and the counter electrode 4 was housed in an exterior can 3, the exterior cup 1 and the exterior can 3 were combined, peripheral portions of the exterior cup 1 and the exterior can 3 were crimped via an insulating gasket 6, and sealing was performed; thereby, an evaluation battery was fabricated.
In the fabricated evaluation battery, peripheral portions of the exterior cup 1 and the exterior can 3 are crimped via the insulating gasket 6, and thus a sealed structure is formed. In the interior of the sealed structure, as shown in FIG. 2, the current collector 7a, the counter electrode 4, the separator 5, the working electrode (negative electrode) 2, and the current collector 7b are stacked in this order from the inner surface of the exterior can 3 toward the inner surface of the exterior cup 1.

(Charge/discharge test)

Each of the evaluation batteries fabricated in the above manner was subjected to the following charge/discharge test at 25°C. In this test, the process of doping lithium ions into the carbon powder was referred to as "charge", and the process of dedoping lithium ions from the carbon powder was referred to as "discharge".
First, constant current charge was performed at a current value of 0.39 mA until the circuit voltage reached 0 mV, switching to constant voltage charge was performed at the time point when the circuit voltage reached 0 mV, and charge was continued until the current value reached 20 μA. The charge capacity (unit: mAh/g) of the first time was determined from the amount of current passed during this time. After that, the test was suspended for 120 minutes. Next, constant current discharge was performed at a current value of 0.39 mA until the circuit voltage reached 1.5 V, switching to constant voltage discharge was performed at the time point when the circuit voltage reached 1.5 V, and discharge was continued until the current value reached 20 µA. The discharge capacity (unit: mAh/g) of the first time was determined from the amount of current passed during this time. The results of discharge capacity obtained for the evaluation batteries are shown in the section of "Battery characteristics" of Table 1 below.

· Evaluation criteria for discharge capacity

In the present invention, the case where the above discharge capacity was 470 mAh/g or more was evaluated as the discharge capacity of the non-graphitizable carbon being high. The above discharge capacity is preferably larger than 470 mAh/g because the discharge capacity of the non-graphitizable carbon is higher.

On the other hand, the case where the above discharge capacity was less than 470 mAh/g was evaluated as the discharge capacity of the non-graphitizable carbon being low.

[Table 1]

| Table 1 | | Production conditions | | Analysis results | | | | | | Battery characteristics |
|---|---|---|---|---|---|---|---|---|---|---|
| | | Source material | Baking temperature | Average particle size | Specific surface area (BET) | d002 | True dencity | Guinier radius Rg1 | Guinier radius Rg2 | Discharge capacity |
| | | | °C | μm | m$^2$/g | nm | g/cm$^3$ | nm | nm | mAh/g |
| Examples | 1 | Coal-based pitch | 850 | 24 | 1.38 | 0.373 | 1.56 | 5.05 | 0.54 | 526 |
| | 2 | Coal-based pitch | 700 | 27 | 7.32 | 0.371 | 1.49 | 5.68 | 0.38 | 727 |
| | 3 | Coal-based pitch | 750 | 28 | 4.19 | 0.374 | 1.53 | 5.42 | 0.45 | 601 |
| | 4 | Coal-based pitch | 800 | 25 | 2.18 | 0.373 | 1.54 | 5.16 | 0.50 | 556 |
| | 5 | Coal-based pitch | 900 | 25 | 0.26 | 0.374 | 1.58 | 4.77 | 0.56 | 472 |

EP 4 549 381 B1

15

| Table 1 | | Production conditions | | | Analysis results | | | | | | Battery characteristics |
|---|---|---|---|---|---|---|---|---|---|---|---|
| | | Source material | Baking temperature | Average particle size | Specific surface area (BET) | d002 | True dencity | Guinier radius Rg1 | Guinier radius Rg2 | | Discharge capacity |
| | | | °C | μm | m$^2$/g | nm | g/cm$^3$ | nm | nm | | mAh/g |
| Comparative Examples | 1 | Coal-based pitch | 950 | 25 | 0.34 | 0.372 | 1.58 | 4.64 | 0.59 | | 441 |
| | 2 | Coal-based pitch | 1100 | 25 | 0.79 | 0.370 | 1.60 | 4.65 | 0.62 | | 370 |
| | 3 | Coal-based pitch | 800 | 4 | 19.4 | 0.374 | 1.57 | 6.39 | 0.52 | | 468 |
| | 4 | Coal-based pitch | 1100 | 16 | 1.03 | 0.351 | 1.85 | 6.28 | 0.63 | | 291 |
| | 5 | Ethylene bottom oil | 1100 | 22 | 2.51 | 0.382 | 1. 52 | 4.89 | 0.60 | | 380 |
| | 6 | Natural graphite | - | 16 | 2.39 | 0.336 | 2.31 | 6.14 | 0.02 | | 355 |

As can be seen from the results shown in Table 1, the secondary battery including the negative electrode containing the carbon powder (corresponding to the non-graphitizable carbon of the present invention) obtained in each of Examples 1 to 5 exhibited a high discharge capacity.

On the other hand, the secondary battery including the negative electrode containing the carbon powder obtained in each of Comparative Examples 1 and 2 (Rg2 being outside the predetermined range) had a low discharge capacity.

The secondary battery including the negative electrode containing the carbon powder obtained in Comparative Example 3 (Rg1 being outside the predetermined range) had a low discharge capacity.

The secondary battery including the negative electrode containing the carbon powder obtained in Comparative Example 4 (d002, Rg1, and Rg2 being outside the respective predetermined ranges) had a low discharge capacity.

The secondary battery including the negative electrode containing the carbon powder obtained in Comparative Example 5 (d002 and Rg2 being outside the respective predetermined ranges) had a low discharge capacity.

The secondary battery including the negative electrode containing the carbon powder obtained in Comparative Example 6 (d002, Rg1, and Rg2 being outside the respective predetermined ranges) had a low discharge capacity.

As above, the non-graphitizable carbon of the present invention has high discharge capacity.

Further, the negative electrode of the present invention containing the non-graphitizable carbon of the present invention and the lithium-ion secondary battery of the present invention including the negative electrode have high discharge capacity, and are therefore useful for the ESS.

[REFERENCE SIGNS LIST]

    1: exterior cup
    2: working electrode (negative electrode)
    3: exterior can
    4: counter electrode (positive electrode)
    5: separator
    6: insulating gasket
    7a: current collector
    7b: current collector

**Claims**

1. Non-graphitizable carbon

   wherein a Guinier radius Rg1 in a range of a scattering vector q of 0.30 nm$^{-1}$ or more and 0.40 nm$^{-1}$ or less as measured by small-angle X-ray scattering and determined by Guinier analysis is 3.00 nm or more and 5.80 nm or less,
   a Guinier radius Rg2 in a range of the scattering vector q of 2.05 nm$^{-1}$ or more and 2.85 nm$^{-1}$ or less is 0.35 nm or more and 0.57 nm or less, and
   an average lattice plane distance d002 of a (002) plane determined by X-ray diffraction is 0.365 nm or more and 0.375 nm or less.

2. The non-graphitizable carbon according to claim 1, wherein the average particle size is 20 $\mu$m or more and 40 $\mu$m or less.

3. The non-graphitizable carbon according to claim 1, wherein a true density is 1.45 or more and 1.58 or less.

4. A negative electrode for a lithium-ion secondary battery, the negative electrode comprising the non-graphitizable carbon according to any one of claims 1 to 3.

5. A lithium-ion secondary battery comprising the negative electrode for a lithium-ion secondary battery according to claim 4.

**Patentansprüche**

1. Nicht-graphitierbarer Kohlenstoff,

   wobei ein Guinier-Radius Rg1 in einem Bereich eines Streuvektors q von 0,30 nm$^{-1}$ oder mehr und 0,40 nm$^{-1}$ oder weniger, gemessen mittels Kleinwinkel-Röntgenstreuung und bestimmt anhand von Guinier-Analyse 3,00 nm oder mehr und 5,80 nm oder weniger beträgt,
   ein Guinier-Radius Rg2 in einem Bereich des Streuvektors q von 2,05 nm$^{-1}$ oder mehr und 2,85 nm$^{-1}$ oder weniger 0,35 nm oder mehr und 0,57 nm oder weniger beträgt, und
   ein durchschnittlicher Netzebenen-Abstand d002 einer (002)-Ebene, bestimmt mittels Röntgenbeugung 0,365 nm oder mehr und 0,375 nm oder weniger beträgt.

2. Nicht-graphitierbarer Kohlenstoff nach Anspruch 1, wobei die durchschnittliche Teilchengröße 20 $\mu$m oder mehr und 40 $\mu$m oder weniger beträgt.

3. Nicht-graphitierbarer Kohlenstoff nach Anspruch 1, wobei eine wahre Dichte 1,45 oder mehr und 1,58 oder weniger beträgt.

4. Negative Elektrode für eine Lithiumionen-Sekundärbatterie, wobei die negative Elektrode den nicht-graphitierbaren Kohlenstoff nach einem der Ansprüche 1 bis 3 umfasst.

5. Lithiumionen-Sekundärbatterie, die die negative Elektrode für eine Lithiumionen-Sekundärbatterie nach Anspruch 4 umfasst.

**Revendications**

1. Carbone non graphitisable, dans lequel

   le rayon de Guinier Rg1, dans une plage de vecteur de diffusion q supérieure ou égale à 0,30 nm$^{-1}$ et inférieure ou égale à 0,40 nm$^{-1}$ telle que mesurée par une diffusion des rayons X aux petits angles et déterminée par une analyse de Guinier, est supérieur ou égal à 3,00 nm et inférieur ou égal à 5,80 nm,
   le rayon de Guinier Rg2, dans une plage de vecteur de diffusion q supérieure ou égale à 2,05 nm$^{-1}$ et inférieure ou égale à 2,85 nm$^{-1}$, est supérieur ou égal à 0,35 nm et inférieur ou égal à 0,57 nm, et
   la distance moyenne entre plans réticulaires d002 d'un plan (002), déterminée par diffraction des rayons X, est supérieure ou égale à 0,365 nm et inférieure ou égale à 0,375 nm.

2. Carbone non graphitisable selon la revendication 1, dans lequel la taille de particule moyenne est supérieure ou égale à 20 $\mu$m et inférieure ou égale à 40 $\mu$m.

3. Carbone non graphitisable selon la revendication 1, dans lequel la densité réelle est supérieure ou égale à 1,45 et inférieure ou égale à 1,58.

4. Électrode négative pour une batterie secondaire lithium-ion, l'électrode négative comprenant le carbone non graphitisable selon l'une quelconque des revendications 1 à 3.

5. Batterie secondaire lithium-ion comprenant l'électrode négative pour une batterie secondaire lithium-ion selon la revendication 4.

## FIG. 1 (a)

## FIG. 1 (b)

FIG. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H07320740 A
- JP 6245412 B
- WO 2014157125 A
- JP H10083814 A
- EP 2808300 A1
- US 2014080004 A
- JP H09153359 A

**Non-patent literature cited in the description**

- **SUGIO OHTANI**. *TANSO-SEN'I" ("CARBON FIBER)*, March 1986, 733-742